# EUROPÄISCHE PATENTSCHRIFT

(11) **EP 1 690 816 B1**
(45) Veröffentlichungstag und Bekanntmachung des Hinweises auf die Patenterteilung: **23.07.2008**
(21) Anmeldenummer: 06002098.9
(22) Anmeldetag: 02.02.2006
(51) Int. Cl.: B65G 53/46

(54) **Verfahren und Vorrichtung zum Transportieren von pulverförmigem Füllgut durch eine Leitung**
Method and device for the transport of powdery products through a pipe
Procédé et dispositif pour le transport de produits pulvérulentes dans une conduite

(30) Priorität: 11.02.2005 DE 102005006601
(43) Veröffentlichungstag der Anmeldung: 16.08.2006
(73) Patentinhaber: Harro Höfliger Verpackungsmaschinen GmbH, 71573 Allmersbach im Tal (DE)
(72) Erfinder: Scharger, Rolf, 73650 Winterbach (DE)
(74) Vertreter: Müller, Hans

(56) Entgegenhaltungen:
- EP-A- 0 412 330
- FR-A- 2 573 882
- US-A- 4 073 244
- US-B1- 6 334 653

## Beschreibung

### TECHNISCHES GEBIET

Die Erfindung betrifft ein Verfahren zum Transportieren von pulverförmigem, insbesondere mikronisiertem Füllgut durch eine Leitung. Die Erfindung betrifft auch eine Vorrichtung zum Durchführen des Verfahrens.

Solche Füllgüter können Lebensmittel und Genussmittel, wie beispielsweise Kaffeepulver, Kakaopulver und dergleichen mehr sein. Das Füllgut kann aber auch ein Arzneimittel sein und dabei sehr kleine, nicht fließfähige pulverisierte Teilchen enthalten oder nur aus solchen bestehen. Insbesondere solche als Arzneimittel verwendeten Pulver werden von Patienten in Form von sogenanntem mikronisierten Pulver als Arzneimittel in Kleinstmengen von 2 bis 20 mg (Milligramm) eingenommen. Solche mikronisierten Pulver haben eine Partikelgröße zwischen 0,5 Mikrometer und 5,0 Mikrometer und kleiner. Solche Pulver agglomerieren sehr stark, so dass sie technologisch nicht einfach transportiert und in Behältnisse abgefüllt werden können.

### STAND DER TECHNIK

Aus der DE 102 47 829 A1 sind ein Verfahren und eine Vorrichtung zum pneumatischen Fördern von pulverförmigem Material durch eine Leitung hindurch bekannt. Das pulverförmige Material wird abwechselnd mit einem Unterdruck und Überdruck beaufschlagt und so abwechselnd in einen Leitungsabschnitt hineingesaugt und aus demselben wieder herausgedrückt. Das Beaufschlagen mit einem Gasunterdruck und einem Gasüberdruck erfordert ein Filterelement. Je feiner das pulvrige Material ist, umso schneller setzen sich solche Filterelemente mehr oder weniger stark zu. Um die Leistungsfähigkeit und Kontinuität des Pulvertransportes durch die Leitung hindurch aufrecht zu erhalten, muss entsprechend dem Zusetzen des Filterelementes der Überdruck kontinuierlich erhöht werden. Es wird versucht, den Verunreinigungsgrad zu vermindern und dadurch die Lebensdauer des Filterelements zu vergrößern, indem das Filterelement so ausgebildet wird, dass es den mit Unterdruck und Überdruck beaufschlagten Leitungsabschnitt als Hohlzylinder umschließt.

Durch derartige pulvriges Füllgut transportierende Leitungen hindurch werden Abfüllvorrichtungen mit solchem pulvrigem Füllgut versorgt, wie sie beispielsweise aus der DE 202 09 156 U1 oder DE 102 26 989 A1 bekannt sind. Aus den Abfüllvorrichtungen wird pulvriges Füllgut in vorbestimmten dosierten Mengen in einzelne Behältnisse hineingefüllt. Eine Betriebsunterbrechung solcher Abfüllvorrichtungen, wie sie beispielsweise bei Reinigungsarbeiten an dem vorstehend erwähnten, nicht mehr ausreichend gasdurchlässigen Filterelement auftreten können, sind höchst unerwünscht.

Die US 4,073,244 beschreibt eine Materialverladevorrichtung, mit der Asche aus Kesseln, in denen Kohle verbrannt wird, abtransportiert werden kann. Unterhalb der Kessel ist eine Rohrleitung angeordnet, die mit den Ascheauslässen der Kessel über eine Ascheentleerungskammer verbunden ist. Diese Ascheentleerungskammer kann über ein Domventil verschlossen werden; nach Verschließen des Domventils wird die Ascheentleerungskammer durch Anlegen von Druckluft an die Rohrleitung entleert.

### DARSTELLUNG DER ERFINDUNG

Ausgehend von diesem vorbekannten Stand der Technik liegt der Erfindung die Aufgabe zugrunde, die Versorgung von Abfüllvorrichtungen der vorstehend genannten Art mit pulvrigem Füllgut technologisch möglichst sicher und dabei wirtschaftlich möglichst günstig zu gestalten.

Diese Erfindung ist durch das erfindungsgemäße Verfahren gemäß Anspruch 1 und durch eine dieses Verfahren nutzende Vorrichtung gemäß Anspruch 2 gegeben.

Erfindungsgemäß ist vorgesehen, im Vorratsgefäß ein Rakelelement anzuordnen, mittels dessem pulvriges Füllgut in den kammerartigen Leitungsbereich hineingerakelt, das heißt hineingeschoben werden kann. Das Rakelelement kann gleichzeitig auch dazu benutzt werden, den kammerartigen Leitungsbereich zu verschließen. Sofern sich der kontinuierlich oder taktweise angetriebene Rakel im Bereich der Öffnung des kammerartigen Leitungsbereichs befindet, kann er als Verschluss für diesen Leitungsbereich dienen. Beim Weiterbewegen des Rakels gibt er dann die Öffnung frei, so dass ein nachfolgender oder derselbe Rakel wieder pulvriges Füllgut in den Leitungsbereich hineinschieben kann.

Das in dem Vorratsgefäß vorhandene Füllgut kann dadurch kontinuierlich oder taktweise aufgelockert werden, um das Bilden von Materialbrücken innerhalb des Vorratsgefäßes zu vermeiden.

Die Erfindung hat ferner den Vorteil, dass keine gasdurchlässigen Filterelemente zum Transport des pulvrigen Füllgutes benötigt werden. Der Transport beziehungsweise Weitertransport des pulvrigen Füllgutes durch eine Leitung wird nämlich ausschließlich durch Gasdruckstöße wie insbesondere Luftdruckstöße verwirklicht. Gemäß einem Ausführungsbeispiel wird in einer Leitung, durch die pulvriges Füllgut hindurchtransportiert werden soll, ein in dieser Leitung ausgebildeter kammerartiger Leitungsbereich geöffnet und pulvriges Füllgut in diesen Leitungsbereich eingefüllt. Anschließend wird dieser kammerartige Leitungsbereich verschlossen und dann das eingefüllte Füllgut mittels zumindest eines Druckluftstoßes aus diesem kammerartigen Leitungsbereich heraus und zumindest ein Stück weit in die Leitung hineingedrückt. In den dann vollständig oder teilweise geleerten kammerartigen Leitungsbereich wird dann wieder Füllgut eingefüllt und wieder in gleicher Weise mittels eines oder mehrerer Druckluftstöße aus diesem kammerartigen Leitungsbereich heraus und in die Leitung zumindest ein Stück weit hineingedrückt. Dieser Vorgang wiederholt sich taktweise mit der Folge, dass durch die Leitung Füllgutportionen, die in der Leitung mit mehr oder weniger großem Abstand hintereinander liegen, durch die Leitung hindurchgedrückt werden. Am Mündungsbereich der Leitung fällt das pulvrige Füllgut beispielsweise in den Vorratsbehälter der jeweiligen, bei der Abfüllvorrichtung vorhandenen Dosiervorrichtung.

Das Befüllen des kammerartigen Leitungsbereiches kann aus einem Pulver-Vorratsgefäß heraus erfolgen, das beispielsweise mit seinem im Bodenbereich vorhandenen Auslass so zu dem kammerartigen Leitungsbereich positioniert wird, dass aus dem Vorratsgefäß heraus Pulver in den kammerartigen Leitungsbereich hineinströmen kann. Anschließend wird der kammerartige Leitungsbereich verschlossen und das pulvrige Füllgut aus diesem Leitungsbereich, wie vorstehend bereits beschrieben ist, mittels eines oder mehrerer Druckluftstöße in die Leitung hineingedrückt.

Einzelheiten zu der Ausbildung einer erfindungsgemäßen Vorrichtung, mittels der das vorstehende erfindungsgemäße Verfahren durchgeführt werden kann, ist in der Zeichnung dargestellt. Dabei ist von besonderer Bedeutung, dass mehrere Leitungen, durch die jeweils pulvriges Füllgut hindurchtransportiert werden kann, in einem einzigen Vorratsgefäß enden. Aus einem einzigen Vorratsgefäß kann dadurch durch mehrere Leitungen hindurch pulvriges Füllgut zu mehreren Abfüllvorrichtungen hintransportiert werden. Die mehreren Auslässe des Vorratsgefäßes können im Bodenbereich desselben und dort vorzugsweise so angeordnet sein, dass durch einen sich hin und her bewegenden, insbesondere rotierenden Rakel die einzelnen Öffnungen der verschiedenen Leitungen nacheinander oder auch gleichzeitig geöffnet und verschlossen werden können. Der Rakel kann dementsprechend mehrere Rakelarme besitzen, die einerseits Füllgut in die einzelnen kammerartigen Leitungsbereiche hineinschieben und andererseits nach Befüllen der betreffenden Leitungsbereiche mit Füllgut dieselben verschließen. Dies kann, wie in der Zeichnung beispielhaft dargestellt ist, durch einen rotierenden Rakel mit entsprechend vielen Rakelarmen auf technologisch einfache Weise wirkungsvoll ermöglicht werden.

In dem Vorratsgefäß kann eine Rührvorrichtung vorgesehen werden, um eine Brückenbildung von Füllgut in dem Vorratsgefäß zu vermeiden. Diese Rührvorrichtung kann konstruktiv mit dem Rakel fest verbunden sein, so dass bei einer beispielsweise rotierenden Bewegung des Rührers gleichzeitig auch der Rakel in Rotationsbewegung gebracht wird.

Der zum Transport der einzelnen Füllgutmengen benötigte Gas- wie insbesondere Luft-Druckstoß kann in seiner Impulslänge und unabhängig davon auch in seiner Druckstärke beliebig eingestellt werden. Bei einem im Stand der Technik bekannten Filterelement, das abwechselnd mit Unterdruck und mit Überdruck beaufschlagt wird und bei dem der Druckstoß auch zum Abreinigen des Filterelementes benutzt wird, kann eine bestimmte Druckstärke nicht unterschritten werden. Diese Einschränkung ist im vorliegenden Fall wegen des nicht vorhandenen Filterelementes nicht vorhanden.

Weitere Ausgestaltungen und Vorteile der Erfindung sind den in den Ansprüchen ferner aufgeführten Merkmalen sowie dem in der Zeichnung dargestellten Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: einen Querschnitt durch ein erfindungsgemäßes Vorratsgefäß mit geöffneten Bodenauslässen,

- Fig. 2: einen Querschnitt durch das Vorratsgefäß nach Fig. 1 im Bereich seines Bodens,
- Fig. 3: eine Darstellung entsprechend Fig. 1 mit verschlossenen Bodenauslässen,
- Fig. 4: einen Querschnitt durch das Vorratsgefäß nach Fig. 3 im Bereich seines Bodens,
- Fig. 5: einen Längsschnitt durch das um 180° (Altgrad) verschwenkte und an eine Pulverfass angedockte Vorratsgefäß nach der Erfindung,
- Fig. 6: das zusammen mit dem Pulverfass um 180° wieder nach oben zurückverschwenkte Vorratsgefäß, das aus dem Pulverfass heraus wieder mit Pulver befüllt ist
- Fig. 7: eine zu Fig. 1 vergleichbare Darstellung für ein anderes Vorratsgefäß,
- Fig. 8: einen Querschnitt durch das Vorratsgefäß nach Fig. 7 im Bereich seines Bodens.

### WEGE ZUM AUSFÜHREN DER ERFINDUNG

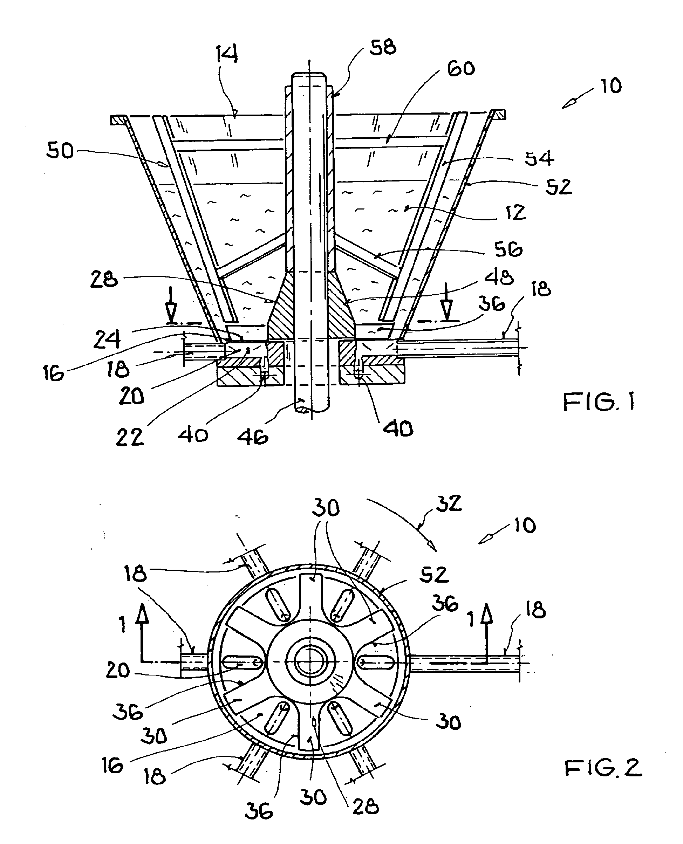

In einem sich nach unten konisch verjüngenden Vorratsgefäß 10 (Fig. 1) ist pulvriges Füllgut 12 vorhanden. Im vorliegenden Beispielsfall ist in diesem Zustand das Vorratsgefäß 10 durch einen Deckel 14 verschlossen. Der Deckel könnte auch nicht vorhanden sein.

Im Boden 16 des Vorratsgefäßes 10 sind umfangsmäßig verteilt sechs Leitungen 18 vorhanden, die im vorliegenden Fall sternförmig angeordnet sind. Es könnten auch mehr oder weniger als sechs Leitungen 18 am Vorratsgefäß 10 angeordnet sein.

Jede der Leitungen 18 endet mit einem kammerartigen Leitungsbereich 20 unterhalb des Bodens 16. Dieser kammerartige Leitungsbereich 20 besitzt eine nach oben zum Vorratsgefäß 10 hin gerichtete Öffnung 22. Diese Öffnung 22 kommuniziert mit einer im Boden 16 etwa gleichgroßen Öffnung 24. Das in dem Vorratsgefäß 10 vorhandene pulvrige Füllgut 12 kann durch die Öffnung 24 des Bodens 16 und durch die Öffnung 22 in der Leitung 18 in den kammerartigen Leitungsbereich 20 der Leitung 18 - von oben nach unten - hineinfallen. Dies gilt für jede der vorhandenen Leitungen 18.

Das Befüllen des kammerartigen Leitungsbereiches 20, der eine Art nach oben offene Pulverkammer darstellt, erfolgt mittels eines Rakels 28. Dieser Rakel 28 besitzt im vorliegenden Beispielsfall mehrere Rakelarme 30, die über den Boden 16 in einer zum Boden 16 parallelen Ebene, mit ganz geringem Abstand zu demselben, sich rotierend entlangbewegen und pulvriges Füllgut 12 mittels ihrer in Rotationsrichtung 32 vorderen Längsseite 36 in den entsprechenden Leitungsbereich 20 hineinschieben. Beim weiteren Drehen des betreffenden Rakels 28 in Rotationsrichtung 32 verschließt der jeweilige Rakelarm 30 eine Öffnung 24 im Boden 16. Dadurch wird auch die Öffnung 22 im kammerartigen Leitungsbereich 20 verschlossen. Der Rakel 28 könnte auch nur einen Rakelarm besitzen.

Durch einen im hinteren Bodenbereich des kammerartigen Leitungsbereichs 20 einmündenden Druckluftkanal 40 kann nun Druckluft in den Leitungsbereich 20 von außen hineingedrückt und das in dem Leitungsbereich 20 vorhandene Füllgut 12 aus diesem kammerartigen Leitungsbereich 20 heraus und ein Stück weit in die Leitung 18 hineingedrückt werden. Durch den Druckluftkanal 40 wird ein Druckluftimpuls nur dann hindurchgeschickt, wenn der Rakelarm 30 die Öffnung 24 verschließt, wenn also der kammerartige Leitungsbereich 20 in Richtung zum Vorratsgefäß 10 hin verschlossen ist. Der kammerartige Leitungsbereich 20 stellt im Übrigen ein sackartiges Ende der jeweiligen Leitung 18 dar.

Durch das Vorratsgefäß 10 ragt zentral und - bei dessen in Fig. 1 dargestellten Stellung - senkrecht eine Welle 46 hindurch. Die Welle 46 lässt sich über einen nicht dargestellten motorischen Antrieb in Rotationsrichtung 32 antreiben. An der Welle 46 ist eine Nabe 48 drehfest befestigt, die im Bodenbereich des Vorratsgefäßes 10 vorhanden ist. Von der Nabe 48 ragen im vorliegenden Beispielsfall die sechs Rakelarme 30 radial aus. Oben schließt sich an die Nabe 48 ein Rührer 50 an, der ebenfalls drehfest mit der Welle 46 verbunden ist. Der Rührer 50 besitzt parallel zu der Außenwand 52 des Vorratsgefäßes 10 im Abstand angeordnete Längsstäbe 54 und Querstäbe 56, die die Längsstäbe 54 mit einem hülsenförmigen Tragglied 58, das drehfest mit der Nabe 48 verbunden ist, verbinden. Im oberen Bereich sind noch diagonale Haltestäbe 60 vorhanden. Der Rührer 50 besitzt damit eine korbartige Gestalt.

Beim Rotieren der Welle 46 wird der Rührer 50 mit seinen Längsstäben 54, Querstäben 56, oberen Haltestäben 60 in Rotationsrichtung 32 bewegt und lockert dadurch das im Inneren des Vorratsgefäßes 10 vorhandene pulvrige Füllgut 12 auf. Gleichzeitig werden bei dieser Rotationsbewegung des Rührers 50 auch die Rakelarme 30 gemeinsam in Rotationsrichtung 32 bewegt und dabei Pulver in den Bereich der Bodenöffnungen 24 bewegt. Sofern der unter der jeweiligen Bodenöffnung 24 vorhandene kammerartige Leitungsbereich 20 leer ist, wird so dieser Leitungsbereich 20 wieder mit Pulver gefüllt. Sofern in dem kammerartigen Leitungsbereich noch Pulver vorhanden ist, weil beispielsweise das Pulver aus diesem Leitungsbereich 20 mittels eines oder mehrerer Druckluftstöße nicht entleert worden ist, streicht der Rakelarm 30 über die Öffnung 24 hinweg, ohne dass dabei Pulver in den Leitungsbereich 20 hineingefüllt wird.

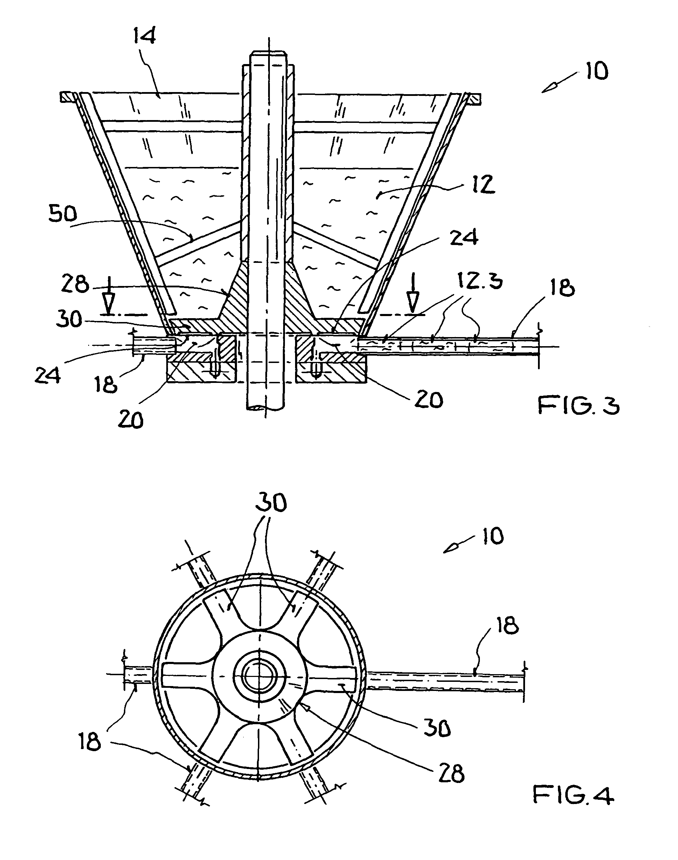

In Fig. 3 und 4 ist der Zustand dargestellt, bei dem sich die sechs Rakelarme 30 alle gleichzeitig genau über den ebenfalls sechs Öffnungen 24 befinden. In dieser Stellung können dann die kammerartigen Leitungsbereiche 20 entleert werden.

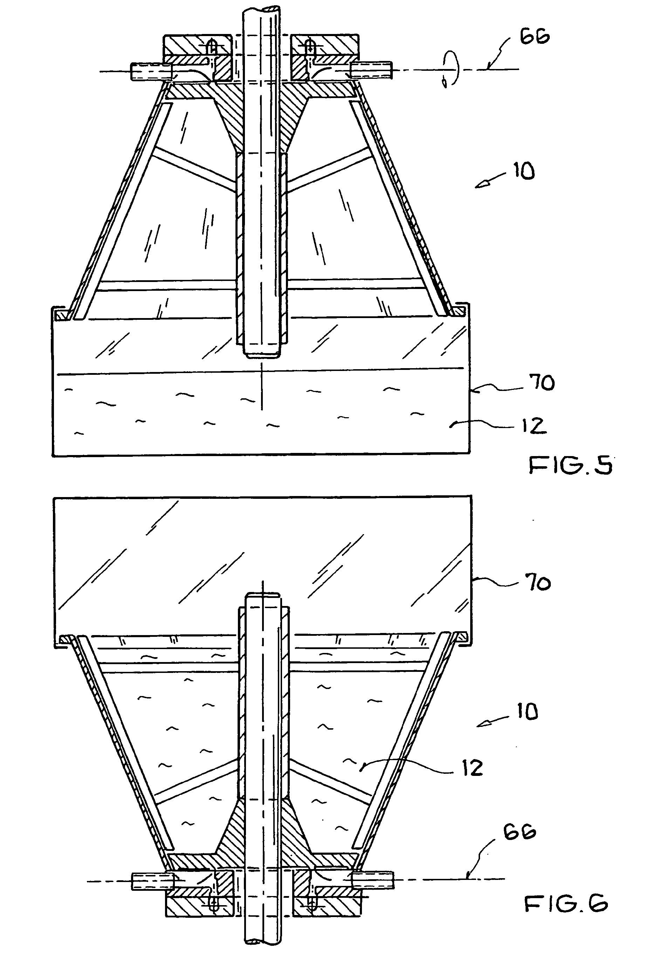

Sobald aus dem Vorratsgefäß 10 alles pulvrige Füllgut 10 durch die Leitungen 18 hindurch wegtransportiert worden ist und das Vorratsgefäß 10 damit leer ist, wird dasselbe um 180° (Altgrad) um eine im vorliegenden Fall horizontale Achse 66 verschwenkt. Der Deckel 14 des Vorratsgefäßes 10 kann dann abgenommen werden beziehungsweise ist schon vorher abgenommen worden. Es kann nun ein pulvriges Füllgut 12 enthaltendes Pulverfass 70, von dem der obere Deckel entfernt worden ist, von unten an den Vorratsbehälter 10 angedockt werden (Fig. 5). Anschließend wird das Vorratsgefäß 10 mit angedocktem Pulverfass 70 wieder nach oben um 180° verschwenkt. Das Vorratsgefäß 10 befindet sich dann wieder in seiner in Fig. 1 und 3 dargestellten Stellung. Aus dem Pulverfass 70 kann nunmehr das in ihm vorhandene pulvrige Füllgut 12 nach unten in das Vorratsgefäß 10 hineinfallen. Sobald das Pulverfass 70 leer ist, kann dasselbe von dem Vorratsgefäß 10 weggenommen und das Vorratsgefäß 10 wieder durch den Deckel 14 verschlossen werden. Das Pulverfass 70 könnte auch auf dem Vorratsgefäß 10 verbleiben, so dass dann auf einen Deckel 14 verzichtet werden könnte. Während dieses Wiederbefüllens des Vorratsgefäßes 10 mit pulvrigem Füllgut 12 wird kein pulvriges Füllgut 12 durch die Leitungen 18 von dem Vorratsgefäß 10 wegtransportiert. Dies behindert die Arbeit der an die Leitungen 18 angeschlossenen Abfüllvorrichtung nicht, da die bei den Abfüllvorrichtungen vorhandenen Dosiereinrichtungen jeweils über eigene kleine Vorratsspeicher für das pulvrige Füllgut 12 verfügen. In diesen, zum Stand der Technik gehörenden und in der Zeichnung nicht dargestellten Vorratsspeichern enden die an dem Vorratsgefäß 10 angeschlossenen Leitungen 18.

Mittels einer Füllstandsüberwachung des in den jeweiligen Vorratsspeichern noch vorhandenen Füllgutes können die Druckstöße hinsichtlich ihrer Impulslänge und beziehungsweise oder in ihrer Druckstärke in den kammerartigen Leitungsbereichen der Leitungen 18 variabel eingestellt und gesteuert werden, so dass nur die kammerartigen Leitungsbereiche von denjenigen Leitungen mittels eines oder mehrerer Druckstöße entleert werden, die in nachgeordnete Vorratsspeicher einmünden, in die hinein pulvriges Füllgut durch die Leitungen 18 hindurch nachgefüllt werden soll.

In der in Fig. 3 dargestellten rechten Leitung 18 sind beispielhaft drei Portionen 12.3 von pulvrigem Füllgut 12 dargestellt. Jede dieser Portionen 12.3 entspricht der aus einem kammerartigen Leitungsbereich 20 mittels eines Druckluftimpulses herausgedrückten Menge an pulvrigem Füllgut. Das pulvrige Füllgut beziehungsweise die Portion 12.3 wird dabei jeweils nur ein Stück weit in die Leitung 18 hineingedrückt und weitergedrückt. Dieser Entleervorgang erfolgt nacheinander mehrere Male, so dass in der Leitung 18 nacheinander - wie Perlen auf einer Kette - Portionen 12.3 angeordnet sind. Die jeweils letzte der Portionen 12.3 schiebt die vorderen Portionen durch die Leitung 18 hindurch. Die einzelnen Portionen 12.3 verlassen die Leitung nacheinander an ihrem in der Zeichnung nicht dargestellten anderen Ende.

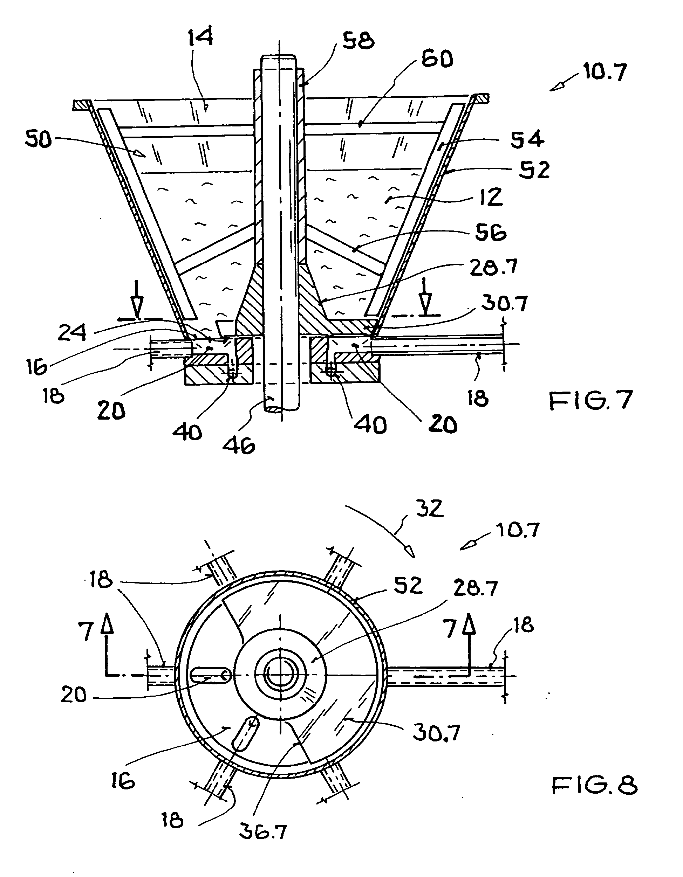

Das in Fig. 7 und 8 dargestellte Vorratsgefäß 10.7 unterscheidet sich von dem Vorratsgefäß 10 durch seinen Rakel 28.7.

Der Rakel 28.7 besitzt einen einzigen Rakelarm 30.7. Dieser Rakelarm 30.7 besitzt eine derartige große zum Boden 16 parallele flächenmäßige Ausdehnung, dass er gleichzeitig mehrere - im vorliegenden Beispielsfall drei oder vier - Öffnungen 24 im Boden 16 gleichzeitig bedeckt. Der Rakel 28 des Vorratsgefäßes 10 hat gleichzeitig immer alle Öffnungen 24 freigegeben oder verschlossen. Auf diese Weise bleiben bei dem Rakel 28.7 die jeweils verschlossenen Öffnungen 24 länger verschlossen bei vergleichbarer Rotation des Rakels 28.7, als es bei dem Rakel 28 der Fall ist. Dadurch kann vergleichsweise länger Druckluft durch den jeweiligen Druckluftkanal 40 in den kammerartigen Leitungsbereich 20 hineingeleitet werden, als es bei dem Rakel 28 möglich ist.

## Patentansprüche

1. Verfahren zum Transportieren von pulverförmigem, insbesondere mikronisiertem Füllgut (12) durch zumindest eine Leitung (18), bei dem
- das in einem Vorratsgefäß (10, 10.7) vorhandene Füllgut (12) kontinuierlich oder taktweise aufgelockert wird,
- ein in jeder Leitung (18) ausgebildeter kammerartiger Leitungsbereich (20) geöffnet und in denselben Füllgut (12) aus dem Vorratsgefäß (10, 10.7) heraus lose eingefüllt wird,
- der kammerartige Leitungsbereich (20) nach außen hin dann verschlossen wird und anschließend
- das eingefüllte Füllgut (12) mittels zumindest eines Druckluftstoßes aus diesem kammerartigen Leitungsbereich heraus und zumindest ein Stück weit in die Leitung (18) hineingedrückt wird,
- **dadurch gekennzeichnet, dass**
- das im Vorratsgefäß (10, 10.7) vorhandene Füllgut (12) in den zumindest einen kammerartigen Leitungsbereich (20) hineingerakelt und anschließend dieser Leitungsbereich verschlossen wird.

2. Vorrichtung zum Durchführen des Verfahrens nach Anspruch 1,
- mit zumindest einem kammerartigen, eine Pulverkammer darstellenden Leitungsbereich (20),
- - der an zumindest einer Öffnung (24) im Boden (16) eines Vorratsgefäßes (10, 10.7) für pulvriges Füllgut (12) vorhanden ist und
- - der gleichzeitig in jeder der vorhandenen Leitungen (18) in deren Endbereich vorhanden ist, durch welche hindurch die in dem jeweiligen kammerartigen Leitungsbereich (20) vorhandene Portion (12.3) an pulvrigem Füllgut (12) aus dem betreffenden Leitungsbereich (20) wegtransportierbar ist,
- mit zumindest einem Druckluftkanal (40), der in jeden der vorhandenen kammerartigen Leitungsbereiche (20) in den rückwärtigen Endbereich der vorhandenen Leitungen (18) einmündet,
- mit einer Verschlussvorrichtung für jeden kammerartigen Leitungsbereich (20) zum pulverdichten Verschließen desselben gegenüber dem Vorratsgefäß (10, 10.7),
- **dadurch gekennzeichnet, dass**
- zumindest ein Rakel (28, 28.7, 30) so über die zumindest eine Öffnung (24) bewegbar ist, dass pulverförmiges Füllgut (12) aus dem Vorratsgefäß (10, 10.7) in den mit dieser Öffnung (24) kommunizierenden kammerartigen Leitungsbereich (20) hineinbewegbar ist.

3. Vorrichtung nach Anspruch 2,
- **dadurch gekennzeichnet, dass**
- der zumindest eine Rakel (28, 28.7) mit zumindest einem Rakelarm (30, 30.7) über einen oder mehrere Öffnungen (24) des Bodens (16), hinwegbewegbar ist.

4. Vorrichtung nach Anspruch 3,
- **dadurch gekennzeichnet, dass**
- eine der Anzahl der Öffnungen (24) entsprechende Anzahl von Rakelarmen (30) vorhanden ist.

5. Vorrichtung nach Anspruch 4,
- **dadurch gekennzeichnet, dass**
- Öffnungen (24) umfangsmäßig verteilt im Boden (16) des Vorratsgefäßes (10, 10.7) vorhanden sind,
- der zumindest eine Rakel (28, 28.7, 30, 30.7) um eine zentrale Drehachse rotierbar vorhanden ist.

6. Vorrichtung nach Anspruch 5,
- **dadurch gekennzeichnet, dass**
- der zumindest eine Rakel (28, 28.7, 30, 30.7) zusammen mit einem im Vorratsgefäß (10, 10.7) rotierenden Rührer (50) um die zentrale Drehachse rotierbar ist.

7. Vorrichtung nach Anspruch 2,
- **dadurch gekennzeichnet, dass**
- der zumindest eine Druckluftstoß, der zum Herausdrücken von Füllgut (12) aus einem kammerartigen Leitungsbereich (20) heraus verwendbar ist, in seiner Impulslänge und/oder in seiner Druckstärke veränderbar einstellbar ist.

## Claims

1. Method for transporting powdery, in particular micronised filler material (12) through at least one line (18), in which
- the filler material (12) present in a supply vessel (10, 10.7) is loosened up continuously or intermittently
- a chamber-like line region (20) formed in each line (18) is opened and into the same filler material (12) is filled loosely out of supply vessel (10, 10.7)
- the chamber-like line region (20) is then sealed towards the outside and subsequently
- the filled filler material (12) is pushed out of this chamber-like line region by means of at least one compressed air impulse and is pushed at least a small distance into the line (18)
- **characterised in that**
- the filler material (12) present in supply vessel (10, 10.7) is inserted by the doctor blade into the at least one chamber-like line region (20) and subsequently this line region is sealed.

2. Device for carrying out the method according to Claim 1,
- with at least one chamber-like line region (20) representing a powder chamber,
-- which is present at at least one opening (24) in base (16) of a supply vessel (10, 10.7) for powdery filler material (12) and
-- which is simultaneously present in each of the present lines (18) in the end region thereof, through which lines (18) the portion (12.3) of powdery filler material (12) present in the respective chamber-like line region (20) can be transported away out of the relevant line region (20),
- with at least one compressed air duct (40) which opens in each of the present chamber-like line regions (20) into the rear end region of the present lines (18),
- with a sealing device for each chamber-like line region (20) for powder-impervious sealing of the same with respect to supply vessel (10, 10.7),
- **characterised in that**
- at least one doctor blade (28, 28.7, 30) can be moved over the at least one opening (24) such that powdery filler material (12) can be moved out of supply vessel (10, 10.7) into the chamber-like line region (20) which communicates with this opening (24).

3. Device according to Claim 2,
- **characterised in that**
- the at least one doctor blade (28, 28.7) can be moved with at least one doctor blade arm (30, 30.7) over one or more openings (24) of the base (16).

4. Device according to Claim 3,
- **characterised in that**
- a number of doctor blade arms (30) corresponding to the number of openings (24) is present.

5. Device according to Claim 4,
- **characterised in that**
- openings (24) are present in the base (16) of the supply vessel (10, 10.7) distributed around the circumference,
- the at least one doctor blade (28, 28.7, 30, 30.7) is rotatable around a central axis of rotation.

6. Device according to Claim 5,
- **characterised in that**
- the at least one doctor blade (28, 28.7, 30, 30.7) can be rotated together with a stirrer (50) rotating in the supply vessel (10, 10.7) around the central axis of rotation.

7. Device according to Claim 2,
- **characterised in that**
- the at least one compressed air impulse, which can be used to push filler material (12) out of a chamber-like line region (20), can be variably set in its impulse length and/or in its pressure level.

## Revendications

1. Procédé pour transporter de la matière pulvérulente, notamment micronisée (12) dans au moins une conduite (18), selon lequel
- la matière (12) présente dans un réservoir (10, 10.7) est aérée de façon continue ou à intervalles réguliers,
- un segment de conduite (20) semblable à une chambre et réalisé dans chaque conduite (18) est ouvert et rempli de matière (12) en vrac provenant du réservoir (10, 10.7),
- le segment de conduite (20) est ensuite fermé par rapport à l'extérieur, et
- la matière (12) qu'il contient est expulsée de ce segment de conduite semblable à une chambre au moyen d'au moins un jet d'air et est enfoncée au moins sur une certaine distance dans la conduite (18),
**caractérisé en ce que** la matière (12) contenue dans le réservoir (10, 10.7) est raclée pour être introduite dans l'au moins un segment de conduite (20) semblable à une chambre et **en ce que** ce segment de conduite est ensuite fermé.

2. Dispositif pour mettre en oeuvre le procédé selon la revendication 1,
- comprenant au moins un segment de conduite (20) semblable à une chambre qui constitue une chambre à poudre,
-- lequel est prévu au niveau d'au moins une ouverture (24) dans le fond (16) d'un réservoir (10, 10.7) pour matière pulvérulente (12) et
-- simultanément dans la zone d'extrémité de chacune des conduites (18) par lesquelles la portion (12.3) de matière pulvérulente (12) contenue dans le segment de conduite (20) semblable à une chambre peut être évacuée hors du segment de conduite considéré (20),
- comprenant également un canal d'air comprimé (40) qui débouche dans chacun des segments de conduite (20) semblables à une chambre situés dans la zone d'extrémité arrière desdites conduites (18), et
- un dispositif d'obturation pour chaque segment de conduite (20) semblable à une chambre, qui est destiné à fermer ce dernier de manière hermétique à la poudre par rapport au réservoir (10, 10.7),
**caractérisé en ce qu'**au moins une racle (28, 28.7, 30) peut balayer l'au moins une ouverture (24) de manière à ce que la matière pulvérulente (12) puisse passer du réservoir (10, 10.7) au segment de conduite (20) semblable à une chambre communiquant avec ladite ouverture (24).

3. Dispositif selon la revendication 2, **caractérisé en ce qu'**au moins une racle (28, 28.7) dotée d'au moins un bras de raclage (30, 30.7) peut balayer une ou plusieurs ouvertures (24) du fond (16).

4. Dispositif selon la revendication 3, **caractérisé en ce qu'**est prévu un nombre de bras de raclage (30) correspondant au nombre d'ouvertures (24).

5. Dispositif selon la revendication 4, **caractérisé en ce que** des ouvertures (24) réparties sur la périphérie sont prévues dans le fond (16) du réservoir (10, 10.7), et **en ce que** l'au moins une racle (28, 28.7, 30, 30.7) peut tourner autour d'un axe de rotation central.

6. Dispositif selon la revendication 5, **caractérisé en ce que** l'au moins une racle (28, 28.7, 30, 30.7) peut tourner autour de l'axe de rotation central en même temps qu'un agitateur (50) tournant dans le réservoir (10, 10.7).

7. Dispositif selon la revendication 2, **caractérisé en ce que** la largeur d'impulsion et/ou la puissance de l'au moins un jet d'air comprimé pouvant servir à expulser de la matière (12) hors d'un segment de conduite (20) semblable à une chambre sont réglables.
